# DEMANDE DE BREVET EUROPEEN

(11) **EP 2 301 644 A1**
(43) Date de publication de la demande: **30.03.2011**
(21) Numéro de dépôt: 10183151.9
(22) Date de dépôt: 19.06.2001
(51) Int. Cl.: B01D 15/02

(54) **Procédé et dispositif de séparation en lit mobile simulé d'au moins un constituant dans des colonnes ayant un rapport longueur sur diamètre approprié**

(30) Priorité: 28.06.2000 FR 0008359
(62) Demande divisionnaire de: 01401608.3
(71) Demandeur: Novasep Process, 54340 Pompey (FR)
(72) Inventeur: Lehoucq, Sylvie, 54500 Vandoeuvre-Les-Nancy (FR); Ludemann-Hombourger, Olivier, 54230 Chavigny (FR); Nicoud, Roger-Marc, 54630 Richarmenil (FR); Hamende, Michel, 1180 Bruxelles (BE); Cavoy, Emile, 6120 Ham-sur-Heure (BE)
(74) Mandataire: Hirsch & Associés

(57) **Abrégé**

L'invention concerne un procédé et un dispositif de séparation d'au moins un constituant d'un mélange en lit mobile simulé, dans lequel chacune des colonnes chromatographiques contenant un absorbant présente un rapport L (longueur) sur D (diamètre) compris entre 0,01 et 0,34.

De plus, le rapport L_{TOT} (longueur dans n colonnes) sur D (diamètre) est compris entre 0,06 et 2,3.

On peut appliquer une pression dynamique axiale sur chacune des colonnes supérieures à la perte de la charge de l'ensemble des colonnes.

Application à la séparation d'isomères optiques en pharmacie.

## Description

L'invention concerne un procédé et un dispositif de séparation en lit mobile simulé d'au moins un composant d'un mélange le contenant.

Elle s'applique en particulier à la chromatographie préparative et notamment à la séparation d'isomères optiques, utilisés dans l'industrie pharmaceutique.

L'arrière plan technologique est illustré par les brevets EP-A-0769316 et US 5 114 590.

En chromatographie discontinue (batch), les tendances sont les suivantes :
- Pour obtenir une bonne résolution, il est nécessaire de disposer d'un grand nombre de plateaux théoriques (N). Or, ce nombre de plateaux dans une colonne chromatographique croît avec le rapport L/dₚ², L étant la longueur de la colonne, dₚ le diamètre moyen des particules qu'elle contient, ce qui signifie que pour une taille donnée de particules, les colonnes les plus longues seront préférables pour réaliser ou améliorer une séparation chromatographique d'un mélange de constituants organiques.
- Le diamètre d'une colonne est calculé en prenant en compte la perte de charge dans celle-ci. Il est dans la pratique courante d'opérer avec une perte de charge maximale qui soit acceptable. Ceci signifie que pour une longueur de colonne donnée, on préférera un diamètre D de colonne plus petit et ainsi un grand rapport L/D.

Des limitations pratiques s'opposent également à l'utilisation de colonnes à grand diamètre.
- Plus le diamètre de la colonne est grand, le rapport entre le diamètre de la colonne et le diamètre du tube alimentant celle-ci est élevé. Ceci conduit, comme montré par Etienne et al., 2^{ème} congrès de Génie des Procédés, Toulouse, France, 417-422, 1989, à une distribution d'écoulement non piston à l'entrée de la colonne. En augmentant la longueur de la colonne, on atténue l'importance de ce phénomène.
- Certains auteurs (C. Dewaele, M. De Coninck, M. Verzele, Separation Science and Technology, 22 (8-10), 1919-1931, 1987) ont décrit une perte d'efficacité en utilisant des diamètres de colonnes importants, supérieurs à 44 mm, qui se traduit par un élargissement des pics chromatographiques, voire un dédoublement des pics.

La littérature décrit des rapports L/D compris entre 2 et 11,5 dans le domaine des séparations chirales (J. Dingenen and J.N. Kinkel, J. Chromatogr. A, 666, 627-650, 1994).

Les limitations décrites en mode discontinu (batch) sont également rencontrées dans les systèmes à adsorption en lit mobile simulé (plus de colonnes signifie plus d'effets de bords). Par exemple dans le brevet US-A-4599115, il est précisé qu'en lit mobile simulé, l'utilisation de lits d'adsorbant à grand diamètre conduit à des écoulements de fluides non uniformes et à des coûts élevés d'installation et de mise en service. Les auteurs ont donc proposé un système en lit mobile simulé caractérisé par une réduction significative de la pression opératoire et des besoins en énergie ainsi que par des colonnes chromatographiques ayant un rapport L/D élevé.

Cette tendance s'est accentuée au cours de la dernière décennie. Mais en augmentant le rapport L/D, les auteurs maximisaient le nombre de plateaux disponibles dans le système aux dépens de la productivité exprimée en grammes de produit par kilogramme de phase stationnaire et par jour. Parallèlement, des contraintes de pression conduisaient à des coûts élevés.

Contrairement à ce qui est enseigné, on a constaté qu'en utilisant un système de plusieurs colonnes chromatographiques en lit mobile simulé pour séparer des constituants organiques à partir d'un mélange, ayant un faible rapport longueur de chaque colonne sur diamètre, on remédiait à ces inconvénients mentionnés ci-haut.

Plus précisément, l'invention concerne un procédé de séparation d'au moins un composant d'un mélange le contenant, dans un dispositif comportant un ensemble de colonnes chromatographiques contenant un adsorbant (ou phase stationnaire), montées en série et en boucle, la boucle comportant au moins un point d'une injection du mélange, au moins un point d'un soutirage d'un raffinat, au moins un point d'une injection de désorbant et au moins un point d'un soutirage d'un extrait, dans lequel l'ensemble des points d'injection et de soutirage sont décalés périodiquement et simultanément, d'un même nombre de colonnes dans une direction donnée définie par rapport à celle de l'écoulement d'un fluide principal circulant à travers la boucle, le procédé étant **caractérisé en ce que** l'on fait circuler le fluide principal dans les dites colonnes chromatographiques, chacune d'elles ayant un rapport longueur sur diamètre L/D compris entre 0,01 et 0,34 et en ce que le rapport L_{TOT}/D de la longueur totale des colonnes sur leur diamètre est compris entre 0,06 et 2,3.

Le système en lit mobile simulé a été décrit notamment dans le brevet US-A-2985589. Il peut être opéré à contre courant simulé selon ce brevet ou à co-courant simulé selon le brevet US-A-4498991.
Selon une caractéristique de l'invention, il est avantageux d'appliquer une pression dynamique axiale sur chacune des dites colonnes supérieure à la perte de charge de l'ensemble des colonnes. Cette compression axiale dynamique est en règle générale exercée en tête de colonne, au moyen par exemple d'un vérin hydraulique couplé à un piston, et elle évite l'apparition de grands volumes morts dus à tout mouvement de la phase adsorbante.

Chaque colonne peut être maintenue à une pression axiale dynamique comprise habituellement entre 3 et 100 bar (1 bar = 10⁵Pa) et de préférence entre 25 et 50 bar.

En général, un système de distribution comprenant habituellement un plateau distributeur, un fritté et éventuellement une grille entre les deux est inséré dans le piston constituant la tête de colonne et dans la partie inférieure ou embase de la colonne. Ce système est construit de manière à corriger les défauts de distribution d'écoulement engendrés par les changements de sections à l'alimentation et à la sortie de la colonne.

Selon une caractéristique du procédé, on a constaté qu'en outre, lorsque le rapport de la longueur totale des colonnes (L_{TOT} = nL) sur le diamètre de la colonne était compris entre 0,06 et 2,3, on optimisait la production journalière de produit séparé et la productivité de la séparation en réalisant, de plus, de substantielles économies de phase stationnaire.

On peut travailler avec au plus 12 colonnes. On préfère néanmoins utiliser un ensemble de 4 à 8 colonnes.

L'invention présente tout son intérêt dans les séparations chirales, en raison du prix très élevé des phases stationnaires chirales.

Il peut être avantageux de minimiser les volumes morts introduits par exemple par la pompe de recyclage du fluide de la dernière colonne dans la première, dans la boucle chromatographique, en adoptant les solutions préconisées dans le brevet US-A-5578216 de la demanderesse, à savoir la diminution appropriée de la longueur d'une colonne immédiatement en amont du volume mort lorsque ce dernier est situé en aval de la dite colonne et en amont des courants de soutirage de la dite colonne, ou bien la diminution appropriée de la longueur de la colonne immédiatement en aval du dit volume mort lorsque ce volume mort est situé en aval des courants d'injection dans la dite colonne et en amont de la dite colonne.
On peut aussi préconiser la solution qui consiste à désynchroniser les périodes de permutation des entrées et sorties de fluides selon le brevet US-A-5578215.

L'invention concerne aussi un dispositif pour la mise en oeuvre du procédé. Il s'agit d'un dispositif de séparation en lit mobile simulé d'au moins un composant d'un mélange le contenant, comportant un ensemble de colonnes chromatographiques contenant un adsorbant, montées en série et en boucle, la boucle comportant au moins un point d'une injection du mélange, au moins un point d'un soutirage d'un raffinat, au moins un point d'une injection de désorbant et au moins un point d'un soutirage d'un extrait, le dispositif comportant des moyens pour décaler périodiquement et simultanément l'ensemble des points d'injection et de soutirage, d'un même nombre de colonnes dans une direction donnée définie par rapport à celle de l'écoulement du fluide principal circulant à travers la boucle, et des moyens de circulation du fluide principal connectés à la première et la dernière colonne, le dispositif étant **caractérisé en ce que** chacune des colonnes présente un rapport longueur L sur diamètre D compris entre 0,01 et 0,34 et de préférence compris entre 0,1 et 0,3 et en ce que le rapport L_{TOT}/D est compris entre 0,06 et 2,3, de préférence entre 1 et 2, L_{TOT} étant la longueur totale des n colonnes, et D le diamètre.

Selon une caractéristique de l'invention, le dispositif peut comporter des moyens pour appliquer une pression sensiblement constante sur le piston de la colonne.

On utilise avantageusement des particules dont la granulométrie est en moyenne inférieure à 100 micromètres.

Pour réaliser un écoulement de type piston, avec des colonnes de large diamètre on peut utiliser un système de distribution de fluide approprié tel que celui décrit par Etienne et al;, 2ème Congrès de Génie des Procédés, Toulouse, France 417-422-1989. Il permet d'assurer une bonne distribution de fluides dans les directions axiale et radiale. La partie inférieure de chaque colonne peut être constituée d'une partie fixe ou d'une partie mobile (piston par exemple), comprenant un système de distribution sensiblement identique à celui de la tête de colonne.

Selon une caractéristique du dispositif, la boucle constituant l'ensemble des colonnes peut comporter une pompe de recyclage du fluide principal , en particulier de la dernière à la première colonne. Pour compenser le volume mort dû à la pompe de recyclage, la longueur de la colonne en amont de la pompe, donc connectée à l'aspiration de celle-ci, peut être plus courte que celle des autres colonnes conformément au brevet US-A-5578216.

Selon une variante, toutes les colonnes peuvent avoir la même longueur mais on peut faire circuler le fluide principal dans la colonne en amont de la pompe de recyclage pendant un temps supérieur à la période de temps de commutation des vannes des autres colonnes, selon le brevet US-A-5578215.

L'invention sera mieux comprise au vu des exemples suivants donnés à titre illustratif.

La méthodologie utilisée pour identifier les conditions du lit mobile simulé est discutée ci-dessous :
L'analyse des profils d'élution obtenus par chromatographie liquide haute performance (HPLC) permet d'optimiser les conditions opératoires.

Le dessin et les caractéristiques d'un lit mobile simulé sont calculés à partir de la mesure des données suivantes décrites dans F.Charton et R.M Nicoud, J. Chromatogr. A, 702, 97-112, 1995 :
- Les isothermes d'adsorption qui donnent la composition des produits dans la phase stationnaire (*C̅*ᵢ) relativement à la composition des produits dans la phase mobile *C*ᵢ quand l'équilibre est atteint, à une température donnée ;
   - La hauteur des plateaux théoriques (H) en fonction de la vitesse (u) de la phase mobile qui quantifie la dispersion axiale et la cinétique de transfert de masse ;
   - La perte de charge (ΔP) en fonction de la vitesse de la phase mobile.

Les isothermes d'adsorption sont déterminées par des injections de quantités croissantes de charge pour une vitesse donnée de la phase mobile. La perte de charge ΔP et la hauteur du plateau théorique (H) en fonction de la vitesse (u) sont déterminées à partir d'injections de très faibles quantités de charge à différentes vitesses de la phase mobile. Ces injections sont idéalement réalisées sur une ou plusieurs colonnes du système en lit mobile simulé.

La pratique courante veut que l'on détermine les débits opératoires du lit mobile simulé en utilisant la solution de la théorie d'équilibre selon Mazzotti et al ; J. of Chromatogr. A, 769, 3-24, 1997. Cette théorie s'appuie cependant sur l'hypothèse d'une infinité de plateaux théoriques, ce qui devrait se traduire par un système à longues colonnes conduisant à des rapports L/D et L_{TOT}/D élevés.

En prenant en compte les effets cinétiques et hydrodynamiques, on a trouvé de manière surprenante que la réduction de la longueur des colonnes conduisait à une augmentation de la productivité, ce qui est totalement en désaccord avec les résultats de la théorie d'équilibre.

### Exemple 1 comparatif : Séparation de 2-(2-pyrrolidone)butyramide.

Description de la séparation :
Phase stationnaire : ChiralPak AD (20 micromètres).
Solubilité dans un mélange alcane-alcool.
Phase mobile : mélange n-heptane / n-méthanol 40/60 v/v.
Température 21°C.
Charge à 40g/l.

Les contraintes de pureté sont 98,5% pour l'extrait et 90% pour le raffinat.
On considère un lit mobile simulé à contre courant à 6 colonnes chacune d'elles de longueur et de diamètre égaux à 450mm soit L/D = 1 et L_{TOT}/D = 6. On adopte la configuration suivante 1-2-2-1, soit une colonne entre l'entrée de l'éluant (phase mobile) et la sortie de l'extrait (zone I), 2 colonnes entre la sortie de l'extrait et l'entrée de la charge (zone II), 2 colonnes entre l'entrée de la charge et la sortie du raffinat (zone III) et une colonne entre la sortie du raffinat et l'entrée de l'éluant (zone IV).

Les débits opératoires optimum pour le système sont les suivants :
Q_{I} = 271,63 l/h.
Q_{Extrait} = 88,83 l/h.
Q_{Charge} = 26,17 l/h.
Q_{Raffinat} = 24,05 l/h.
La période de permutation des vannes est de 23, 3 minutes (avancement des zones dans le sens de l'écoulement des fluides d'une colonne).

Pression dynamique appliquée sur chaque lit : 40 bar (1bar = 10⁵Pa).
Perte de charge ΔP sur l'ensemble du système = 30 bar.
N = 724 plateaux théoriques pour une colonne.

Le système contient 240 kg de phase chirale. On produit 25kg de racémique par jour à la pureté désirée et avec une productivité de 0,105kg de racémique par kg de phase stationnaire et par jour.

### Exemple 2 comparatif :

On reprend l'exemple 1 mais avec un système à lit mobile simulé à contre courant de 6 colonnes présentant la configuration 1-2-2-1 de longueur individuelle L = 320 mm et de diamètre D = 800 mm, soit L/D = 0,4.

Les débits opératoires sont choisis pour conduire à la même perte de charge ΔP sur l'ensemble du système que celle dans l'exemple 1 (ΔP = 30 bar). Ils ont les valeurs suivantes :
Q_{I} = 1223,3 l/h
Q_{Extrait} = 343,4 l/h.
Q_{Charge} = 183,1 l/h.
Q_{Raffinat} = 154,8 l/h.

La période de permutation des vannes ΔT est de 1,75 minute, N = 360 plateaux théoriques par colonne.

Le système contient 543 kg de phase chirale.
La production journalière est de 175,8 kg de racémique à la pureté désirée et la productivité de 0,32 kg de racémique par kilogramme de phase stationnaire par jour.

### Exemple 3 selon l'invention :

On reprend l'exemple 1, mais le lit mobile simulé à contre courant comprend 14 colonnes dans la configuration 2-5-5-2, de longueur individuelle L = 96 mm et de diamètre D = 800 mm soit L/D = 0,12 et L_{TOT}/D = 1,68.
Pour conduire à la même perte de charge ΔP sur l'ensemble du système que celle de l'exemple 1, on adopte les débits suivants :
Q_{Recyclage} = 1747,4 l/h.
Q_{Extrait} = 520,7 l/h.
Q_{Charge} = 295,6 l/h.
Q_{Raffinat} = 216 l/h.
Période (ΔT) = 2,23 minutes.
N = 76 plateaux théoriques / colonne.
Le système contient 380 kg de phase chirale.
La production journalière est de 283,7 kg de racémique et la productivité est de 0,747 kg de racémique par kilogramme de phase et par jour.

### Exemple 4 selon l'invention :

On reprend le système de l'exemple 1, mais avec 6 colonnes dont chacune a une longueur de 96 mm et un diamètre de 800 mm, soit un rapport L/D de 0,12 et un rapport L_{TOTAL}/ D de 0,72.
Les débits optimum sont choisis pour conduire à la même perte de charge sur l'ensemble du système que celle de l'exemple 1 (ΔP = 30 bar).
Q_{Recyclage} = 4583 l/h.
Q_{Extrait} = 1517 l/h.
Q_{Charge} = 300 l/h.
Q_{Raffinat}= 980 l/h.
Période (ΔT) = 1,06 minutes.

Ces conditions opératoires conduisent à la pureté désirée (98,5% pour l'extrait et 90% pour le raffinat) même si l'efficacité de la colonne est limitée à 33 plateaux théoriques par colonne.

Le système contient 163 kg de phase chirale.
La production journalière est dans ce cas de 288 kg de racémique et la productivité de 1,76 kg de racémique par kg de phase stationnaire et par jour.

Exemple 5 comparatif : de 2-[4-(4-chlorobenzhydryl)piperazin-1-yl]-ethoxyacetamide.
Phase chirale : ChiralPak AD (20 micromètres).
Désorbant : mélange de n-heptane et de n-propanol 50/50.
Température : 40°C.
Charge à 40g/l de solution.
Contraintes de pureté 99% pour l'extrait et 85% pour le raffinat.
Nombre de colonnes = 10. Configuration 2-4-3-1.
Longueur individuelle L = 68 mm.
Diamètre : 202 mm.
L/D = 0, 336 et L_{TOT}/D = 3, 36.
Perte de charge ΔP sur l'ensemble du système = 30 bar.
Débits opératoires pour la pureté requise :
   Q_{I} : 280,3 l/h
   Q_{Extrait} : 82 /h
   Q_{Charge}: 11,9 l/h
   Q_{Raffinat} : 33,3 l/h
Période ΔT = 0, 93 minute.

Le système contient 13 kg de phase chirale.
La production journalière est de 11,4 kg de racémique et la productivité est de 0,88 kg de racémique par kilogramme de phase stationnaire et par jour.

### Exemple 6 selon l'invention :

On reprend l'exemple 5, mais avec les paramètres suivants différents :
   Nombre de colonnes = 6. Configuration 1-2-2-1.
   Longueur individuelle L = 68 mm.
   Diamètre = 202 mm.
   L/D = 0,336 et L_{TOT} = 2,02.
   Perte de charge ΔP sur l'ensemble du système = 30 bar.
   Débits opératoires pour la pureté requise :
      Q_{I} : 393 l/h.
      Q_{Extrait} : 13 l/h.
      Q_{Charge} : 11 l/h.
      Q_{Raffinat} : 64 l/h.
   Période ΔT = 0,75 minute.
   Nombre de plateaux par colonne : 18.
   Quantité de phase chirale : 8 kg.
   La production journalière est de 10,5 kg de racémique par jour et la productivité est de 1,3 kg de racémique par kg de phase stationnaire et par jour.

### Exemple 7 comparatif :

Séparation de 3, 7, 11, 15-tetramethyl-2-hexadecen-l-ol (phytol).
Phase stationnaire Lichoprep SI 60 (24 - 40 micromètres).
Désorbent : mélange de n-heptane et d'éthyl acétate 75-25 v/v.
Température 27°C.
Charge à 105 g/l de solution du mélange cis et trans-phytol (33%/66%).
Les contraintes de pureté sont de 99% pour l'extrait et de 95% pour le raffinat.
Nombre de colonnes = 8. Configuration 2-2-2-2.
Longueur individuelle L = 177,5 mm. Diamètre 202 mm
L/D = 0,88 L_{TOT}/D = 7.
Débits opératoires pour la pureté requise :
   Q_{I} : 226 l/h.
   Q_{Extrait} : 32,4 /h.
   Q_{Charge} : 7,8 l/h.
   Q_{Raffinat} : 11,4 l/h.
Période ΔT = 2, 05 minutes.
Perte de charge ΔP sur l'ensemble du système = 30 bar.
N = 400 plateaux théoriques par colonne.

Le système contient 24 kg de phase chirale.
La production journalière est de 19 kg de racémique et la productivité de 0,8 kg de racémique par kilogramme de phase stationnaire et par jour.

### Exemple 8 selon l'invention :

On reprend l'exemple 7 avec le même nombre de colonnes selon la même configuration pour la même séparation, mais avec les paramètres suivants différents :
Longueur de colonne : 58 mm.
Diamètre : 202 mm.
L/D = 0,29 L_{TOT}/D = 2,29.
ΔP sur l'ensemble du système = 30 bar.
les débits opératoires pour la pureté requise sont :
   Q_{I} : 565 l/h
   Q_{Extrait} 81 l/h
   Q_{Charge} : 19, 5 l/h
   Q_{Raffinat} 29, 5 l/h
Période (ΔT) = 0,27 minute.

Le système contient 8kg de phase chirale.
La production journalière est de 49 kg de racémique et la productivité est de 6kg de racémique par kilogramme de phase stationnaire et par jour.

## Revendications

1. Procédé de séparation d'au moins un composant d'un mélange le contenant., dans un dispositif comportant un ensemble de colonnes chromatographiques contenant un adsorbant (ou phase stationnaire), montées en série et en boucle, la boucle comportant au moins un point d'une injection du mélange, au moins un point d'un soutirage d'un raffinat, au moins un point d'une injection de désorbant et au moins un point d'un soutirage d'un extrait, dans lequel on décale périodiquement et simultanément l'ensemble des points d'injection et de soutirage, d'un même nombre de colonnes dans une direction donnée définie par rapport à celle de l'écoulement d'un fluide principal circulant à travers la boucle, le procédé étant **caractérisé en ce que** l'on fait circuler le fluide principal dans les dites colonnes chromatographiques, chacune d'elles ayant un rapport longueur sur diamètre L/D compris entre 0,01 et 0,34 et **en ce que** le rapport L_{TOT}/D de la longueur totale des colonnes sur leur diamètre est compris entre 0,06 et 2,3.

2. Procédé selon la revendication 1 dans lequel on applique une pression dynamique axiale sur chacune des colonnes supérieure à la perte de charge de l'ensemble des colonnes.

3. Procédé selon la revendication 2, dans lequel la pression est maintenue constante et égale à une valeur comprise entre 3 et 100 bar et de préférence entre 25 et 50 bar (1 bar = 10⁵ Pa).

4. Procédé selon l'une des revendications 1 à 3, dans lequel le nombre de colonnes est inférieur ou égal à 12 et de préférence compris entre 4 et 8.

5. Procédé selon l'une des revendications 1 à 4 dans lequel l'adsorbant comporte des particules de granulométrie inférieures à 100 micromètres.

6. Procédé selon l'une des revendications de 1 à 5 dans lequel le rapport L/D est compris entre 0,1 et 0,3 et le rapport L_{TOT}/D est compris entre 1 et 2.

7. Procédé selon l'une des revendications de 1 à 6, dans lequel le mélange comprend des isomères optiques.

8. Procédé selon l'une des revendications 1 à 7 dans lequel la boucle comporte une pompe de recyclage du fluide principal et dans lequel on compense le volume mort de la pompe de recyclage en diminuant la longueur de la colonne en amont de la dite pompe.

9. Procédé selon l'une des revendications 1 à 7 dans lequel la boucle comporte une pompe de recyclage du fluide principal et toutes les colonnes ont la même longueur et dans lequel chaque fois qu'un point d'injection ou de soutirage se situe sur la colonne en amont de la pompe de recyclage, il y reste pendant un temps supérieur à la dite période de temps.

10. Dispositif de séparation en lit mobile simulé d'au moins un composant d'un mélange le contenant, comportant un ensemble de colonnes chromatographiques contenant un adsorbant, montées en série et en boucle, la boucle comportant au moins un point d'une injection du mélange, au moins un point d'un soutirage d'un raffinat, au moins un point d'une injection de désorbant et au moins un point d'un soutirage d'un extrait, le dispositif comportant des moyens pour décaler périodiquement et simultanément l'ensemble des points d'injection et de soutirage, d'un même nombre de colonnes dans une direction donnée définie par rapport à celle de l'écoulement du fluide principal circulant à travers la boucle, et des moyens de circulation du fluide principal connectés à la première et la dernière colonne, le dispositif étant **caractérisé en ce que** chacune des colonnes présente un rapport longueur L sur diamètre D compris entre 0,01 et 0,34 et de préférence compris entre 0,1 et 0,3 et **en ce que** le rapport L_{TOT}/D est compris entre 0,06 et 2,3, de préférence entre 1 et 2, L_{TOT} étant la longueur totale des n colonnes, et D le diamètre.

11. Dispositif selon la revendication 10, comportant des moyens pour appliquer une pression axiale sur chaque colonne.

12. Dispositif selon l'une des revendications 10 et 11, comportant des moyens pour maintenir une pression axiale sensiblement constante sur chaque colonne.

13. Dispositif selon l'une des revendications 10 à 12, dans lequel la dite boucle comporte une pompe de recyclage et dans lequel la colonne en amont de la pompe de recyclage est plus courte que les autres colonnes.
